# EUROPEAN PATENT APPLICATION

(11) **EP 4 120 576 A1**
(43) Date of publication of application: **18.01.2023**
(21) Application number: 21186072.1
(22) Date of filing: 16.07.2021
(51) Int. Cl.: H04B 3/54

(54) **SYSTEM AND METHOD FOR COMMUNICATION**

(71) Applicant: Husqvarna AB, 561 82 Huskvarna (SE)
(72) Inventor: Andriof, Frederik, 89171 Illerkirchberg (DE); Merkle, Martin, 89168 Niederstotzingen (DE)
(74) Representative: Finkele, Rolf

(57) **Abstract**

A communication system **(100, 200)** includes a first terminal **(102, 202)** transmitting a first signal and receiving a second signal. A second terminal **(108, 204)** transmits a second signal and receives the first signal. The system **(100, 200)** is characterized in that a single wire communication interface **(116)** connects both the first, second terminals **(102, 202), (108, 204)** for a uni-directional or a bi-directional communication, using a single wire communication protocol. The communication protocol includes one or more of a start symbol, and a payload. The second terminal **(108, 204),** using a detector **(110),** detects a missing phase package or a missing half AC wave in the first signal to retrieve an information from the received first signal. The first terminal **(102, 202)** includes one or more of a current detection circuit, determine a load modulated current in the received second signal to retrieve information.

## Description

### TECHNICAL FIELD

The present disclosure relates to communication systems. More specifically, the present disclosure relates to a unidirectional or a bidirectional communication system.

### BACKGROUND

Conventional techniques for communicating with remote utility applications majorly concern about transmission of data from a first terminal attached to a wall plug towards a second terminal (remote utility). The second terminal analyzes the received data and initiates the required action at the second terminal. For such technologies, wireless or direct communication is generally preferred. However, these technologies for communication require complex network to even fulfill normative standards. In addition to above, with so many different types of wireless technologies, the communication networks are not limited to one-size-fits-all. Even though if we consider wireless technology for remote utility applications, they are susceptible to issues such as noise, interference, signal loss etc.

Such shortcomings may be obviated by relying on better, reliable technology such as optical communication. Since the cost of optical communication in simple utility applications may be considerable, it may not be worth spending and thereby make other alternatives more preferable. Thus, there is a need to provide a simple and efficient communication system to overcome above mentioned problems.

An example of a communication technique is provided in United State Patent 8,441,213 (hereinafter referred to as '213 reference). The '213 reference discloses a lighting system that includes a controller and a set of line units to send and receive the signals using separate conductors. The controller is a dimmer switch, and the units are intelligent LED lamps. The '213 reference further discloses line units to be controlled in multiple groups even though all the line units are receiving AC power and commands via the two AC power conductors. The system further discloses programming an individual line unit so that it will be associated with a particular group address. However, the '213 reference seems short of providing a simple communication between two voltage conductors using a single dedicated communication interface. The '213 reference rather discloses a complex network having two different conductors for transmission of signals between terminals. This leads to an arrangement having a single transmitter but multiple receivers where different transmission lines are selected having respective addresses related to each transmission line. At the receiving end, there are plurality of lamps associated with the respective transmission lines to receive a first signal broadcasted from the controller, so these lamps initially transmit their address for availability of receipt of the first signal. Therefore, the '213 reference seems complex, time consuming, and bulky lighting system that uses number of transmission lines to transmit the signal.

### SUMMARY

In view of the above, it is an objective of the present disclosure to solve or at least reduce the drawbacks discussed above. The objective is at least partially achieved by a unique uni-directional or bi-directional communication system. The communication system includes a first terminal transmitting a first signal and receiving a second signal. The communication system further includes a second terminal transmitting the second signal and receiving the first signal. The communication system is characterized in that a single wire communication interface is configured to connect the first terminal and the second terminal for the uni-directional or bi-directional communication. The single wire communication interface transmits the encoded first signal and the encoded second signal using a single wire communication protocol therebetween. The single wire communication protocol may have one or more of a start symbol (preferably a start bit), and a payload. The second terminal, using a detector, detects a missing phase package (or a missing half wave) in the first signal to retrieve an information from the received first signal. The first terminal includes a current detection circuit, to determine a load modulated current in the received second signal to retrieve an information from the received second signal.

Additionally, or alternatively, the single wire communication protocol may also include a stop symbol or a stop bit. Further, the payload of the single wire communication protocol may optionally include a length of an information carried by the payload.

Thus, the present disclosure provides a simple, and an efficient communication based on only a single dedicated supply cable. Due to the use of the single wire communication interface, the infrastructure cost as well as the complexity of the system may reduce. Due to the use of the single wire communication interface in between two voltage devices, the chances of loss of an AC voltage package may be low. Further, even if the single AC voltage package is lost, the second terminal may remain unaffected. For example, in case the second terminal may be a remotely placed electric tool such as a pump, the pump may remain unaffected by the single AC voltage package due to its mass inertia. The present disclosure may overcome practical issues related to wireless communication with the remotely placed electric tool, for example a signal attenuation caused in pumps due to surrounding water. Therefore, the present disclosure may overcome the issues related to requirement of a complex circuit to fulfil even normative standards, susceptibility to interference, while being less expensive.

According to an embodiment of the present disclosure, the system includes a switching device coupled to the first terminal that is turned on to establish a current path through the single wire communication interface from the first terminal to the second terminal. The switching device is configured to generate the information that is further modulated by a voltage modulator at the first terminal, to generate the first signal. The second terminal demodulates the received first signal to retrieve the information.

According to an embodiment of the present disclosure, a current path through the single wire communication interface from the second terminal to the first terminal Also, a load modulator coupled to the second terminal modulates the information received to generate the second signal as the load modulated current. Since the current basically does not attenuate even in a long distance within one closed loop, more reliable data transmission may be possible.

According to an embodiment of the present disclosure, the first terminal is electrically coupled to an AC source via a power plug. The first terminal transmits the first signal having the information encoded in an AC voltage package using the single wire communication protocol and eliminates the AC voltage package from the AC source. The second terminal receives the AC voltage package from the first terminal and decodes the received AC voltage package to extract the information. Therefore, the sinusoidal shape of the AC power signal supplied to the second terminal in the form of encoded AC package is not distorted.

According to an embodiment of the present disclosure, the second terminal is coupled to a remotely placed electric tool with respect to the first terminal. This may find applications in installations such as with remotely placed electric tools, say for gardening and like applications. Further, the electric tool such as a pump at the second terminal may need at least one dedicated interface for smooth communication, as the wireless signals may be significantly attenuated.

According to an embodiment of the present disclosure, the first terminal transmits the AC voltage package using the single wire communication protocol comprising the payload having equal or unequal number of positive and negative half-cycles. Since, each cycle of the AC power signal involves two half cycles, where each half cycle starts with a zero-crossing event in which the voltage of the AC sinusoidal signal reaches zero Volts, a developed protocol may advantageously use equal number of positive and negative half-waves, without generation of any disturbing DC offsets, and hence maintaining power grid quality.

According to an embodiment of the present disclosure, the first terminal transmits a parity bit to the second terminal for extension and the second terminal transmits an ACK bit to the first terminal in response to the received AC voltage package. Thus, this may allow that the signal may efficiently be received at the receiving terminal.

According to an embodiment of the present disclosure, the information signal in the first signal is generated based on at least one of a zero-voltage crossing control technique or a zero-current crossing control technique. Further, since current flows near the zero cross of the AC voltage, the peak value of the pulsed current does not become excessive and is suppressed. Further, the current basically does not attenuate even in a long distance within one closed loop, more reliable data transmission may be possible.

According to an embodiment of the present disclosure, the payload is generated by eliminating at least an AC half cycle or more from the AC voltage package for transmission from the first terminal. Therefore, the signal transmitted from the first terminal to the second terminal may have equal number of positive and negative half cycles thereby not generating any disturbing DC offsets in the transmitted first signal.

According to an embodiment of the present disclosure, the second signal is generated in response to the received first signal based on a load modulation of the received payload from the first signal, to generate the load modulated current signal at the second terminal. Therefore, the system may be a robust system that may support smart communication and may be easily integrated into existing products.

According to an embodiment of the present disclosure, the first terminal may be a Smart Cable Master, and the second terminal may be a Smart Cable Slave. This may allow robust single dedicated communication interface for fast and efficient communication between the master and slave terminals.

According to another embodiment of the present disclosure, a method for communication such as a uni-directional or a bi-directional communication is provided. The method for communication includes transmitting the first signal in a first direction through the first terminal. The method further includes communicating the second signal in a second direction through the second terminal. The method is characterized by communicating through a single wire communication interface that connects the first terminal and the second terminal to transmit an encoded first signal and an encoded second signal by the single wire communication protocol therebetween. The single wire communication protocol may have one or more of the start symbol (preferably a start bit), and the payload. Additionally, the single wire communication protocol may also include a stop symbol or a stop bit. Further, the payload of the single wire communication protocol may optionally include a length of an information carried by the payload. The detector coupled at the second terminal detects a missing phase package or a missing half wave in the first signal to retrieve the information from the received first signal. The first terminal, using one or more of a current detection circuit, determines the load modulated current in the received second signal to retrieve the information from the received second signal.

Therefore, the present disclosure performs uni-directional or bi-directional communication using a single communication interface and no additional wire connection. Avoiding use of additional communication interface may reduce the hardware requirement that makes the circuit simple as well as less expensive. Due to the reduced hardware, the fault detection in a circuit may become easier. Also, the implementation of the present disclosure may successfully be implemented without being susceptible to interference. Therefore, the disclosed method may be far better in comparison to power line communication (PLC), phase-fired control (PFC), zero crossing modulation, AS-Interface, optical communication or any such similar techniques.

According to an embodiment of the present disclosure, the method generates the first signal, at the first terminal, by voltage modulation of selectively interrupting an AC power signal from an AC source during a predetermined phase time. According to an embodiment of the present disclosure, the second terminal, using a load modulation, modulates load by selectively setting a load electrically coupled to the second terminal for phase shifting of the payload received from the first terminal. Hence, by switching the supply-voltage/current at zero crossing, the switching process may generate significantly less supply- related interference than other similar methods such as communication via phase control.

According to an embodiment of the present disclosure, the communication between the first terminal and the second terminal includes synchronization by mutually detecting an AC voltage zero-crossing. Therefore, this communication may generate significantly less supply-related interference.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a block diagram of a communication system, according to an embodiment of the present disclosure;
**FIG. 2** illustrates an exemplary embodiment having a communication between a first terminal and a second terminal, according to an embodiment of the present disclosure;
**FIG. 3** illustrates graphical representation of an exemplary start symbol that may be transmitted from the first terminal to the second terminal to initiate a communication over the interface, according to an embodiment of the present disclosure;
**FIG. 4** illustrates a graphical representation of an exemplary stop bit that may be transmitted from the first terminal to the second terminal to terminate a communication over the interface, according to the first embodiment of the present disclosure;
**FIG. 5** illustrates a graphical representation of code 0000, according to an embodiment of the present disclosure;
**FIG. 6** illustrates a graphical representation of code 0001, according to an embodiment of the present disclosure;
**FIG. 7** illustrates a graphical representation of code 0010, according to an embodiment of the present disclosure;
**FIG. 8** illustrates a graphical representation of code 1111, according to an embodiment of the present disclosure; and
**FIG. 9** illustrates a flowchart of a method for communication, according to another embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

The present disclosure provides a uni-directional or a bi-directional communication system. The communication system includes a first terminal transmitting a first signal and receiving a second signal. The communication system further includes a second terminal transmitting the second signal and receiving the first signal. The communication system is such that a single wire communication interface is configured to connect the first terminal and the second terminal for the communication. The single wire communication interface transmits the encoded first signal and the encoded second signal using a single wire communication protocol therebetween. The single wire communication protocol may have one or more of a start symbol, and a payload. The second terminal, using a detector, detects a missing phase package or a missing half wave in the first signal to retrieve an information from the received first signal. The first terminal includes one or more of a current detection circuit, to determine a load modulated current in the received second signal to retrieve an information from the received second signal.

Additionally, the single wire communication protocol may also include a stop symbol or a stop bit. Further, the payload of the single wire communication protocol may optionally include a length of an information carried by the payload.

In some embodiments, a communication system, preferably a bidirectional communication system includes the first terminal (hereinafter also referred to as Smart Cable Master (SCM)), the second terminal (hereinafter also referred to as Smart Cable Slave (SCS)) that bi-directionally communicate with each other, i.e., - transmit as well as receive signals using a single wire communication interface. In some embodiments, the SCM transmits the start symbol to the SCS over the single wire communication interface to initiate transmission of an AC voltage package from the SCM and where the SCM further transmits a stop symbol to the SCS over the single wire communication interface to terminate transmission of the AC voltage package from the SCM.

In some embodiments, a switching device used to generate an information signal may be at least an SCR switch, a TRIAC, a toggle switch, a slider adjustable resistor, a rotating knob adjustable resistor, an adjustable resistor, a touch switch, a thyristor etc.

In some embodiments, a first signal generated by the first terminal and a second signal generated by the second terminal may transmit one at a time over the single wire communication interface. Further, the information in the first and/or the second signal may relate to one or more of a water level, an operation state, a dry run alert, a flood protection, a schedule etc.

In some embodiments, the first signal transmitted from the first terminal to the second terminal may be a downlink communication. Further, the second signal transmitted from the second terminal to the first terminal may be an uplink communication. Moreover, the first terminal as well as the second terminal may wirelessly communicate with a Smart Gateway.

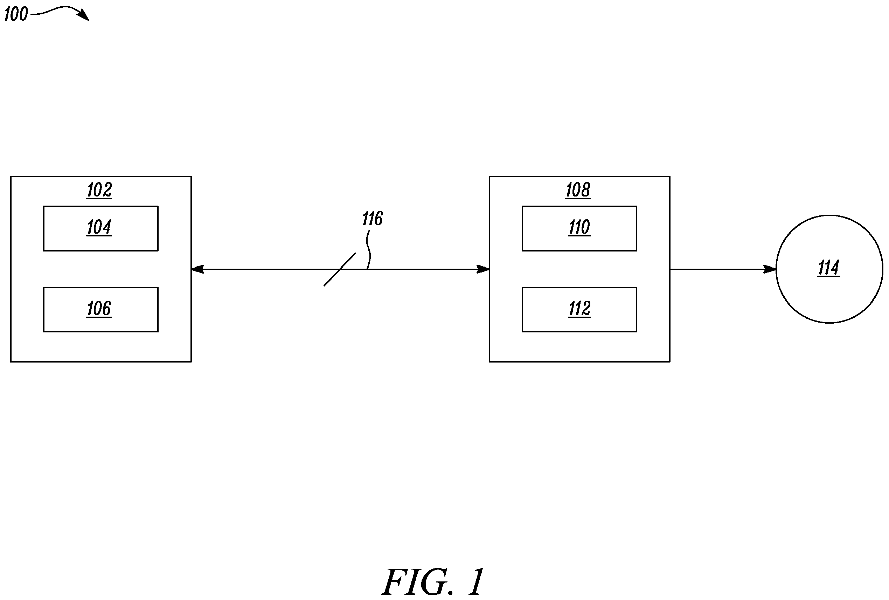

**FIG. 1** illustrates a block diagram for a communication system **100.** The system **100** of the present disclosure includes a first terminal **102,** a second terminal **108,** a detector **104** coupled at the first terminal **102,** a detector **110** coupled at the second terminal **108,** a voltage modulator **106,** a load modulator **112,** a motor **114** and a single wire communication interface **116,** along with a switch such as power switch or TRIAC etc. The communication system **100** includes the first terminal **102** also known as Smart Cable Master (SCM) to transmit a first signal and receive a second signal. The communication system **100** further includes the second terminal **108** also known as Smart Cable Slave (SCS) to transmit the second signal and receive the first signal. The communication system **100** includes the single wire communication interface **116** that connects the first terminal **102** and the second terminal **108** either for the unidirectional or for the bi-directional communication. The interface **116** transmits the encoded first signal and the encoded second signal using a single wire communication protocol therebetween. The single wire communication protocol may have one or more of a start symbol, and a payload. Additionally, the single wire communication protocol may also include a stop symbol or a stop bit. Further, the payload of the single wire communication protocol may optionally include a length of an information carried by the payload. The second terminal **108,** using the detector **110,** detects a missing phase package in the first signal to retrieve an information from the received first signal. The first terminal **102** includes one or more of the detector **104** or a current detection circuit, to determine a load modulated current, modulated by the load modulator **112,** in the received second signal to retrieve an information from the received second signal. The motor **114** coupled to the second terminal **108** therefore runs based on the first signal received at second terminal **108.** In an exemplary embodiment, there may be a plurality of second terminals **108** attached to the first terminal **102.** Thus, the present disclosure provides a simple, and efficient communication as there is only a single dedicated wire communication interface **116.** Due to the use of the single wire communication interface **116,** the infrastructure cost as well as the complexity of the system may reduce. Due to the use of the single wire communication interface in between two voltage devices, the chances of losing an AC voltage package may be low. Further, even if the single AC voltage package is lost, the second terminal **108** may remain unaffected. For example, in case the second terminal **108** may be a remotely placed electric tool such as a pump, the pump may remain unaffected by the single AC voltage package due to its mass inertia. The present disclosure may overcome the practical issues related to wireless communication with the remotely placed electric tool, for example a signal attenuation caused in pumps due to surrounding water. Therefore, the present disclosure may overcome the issues related to requirement of a complex circuit to fulfil even normative standards, may be less susceptible to interference as well as less expensive. Therefore, the present disclosure may provide a robust smart communication technique that may be easily integrated with existing products as well as sustainable due to fewer raw material resources.

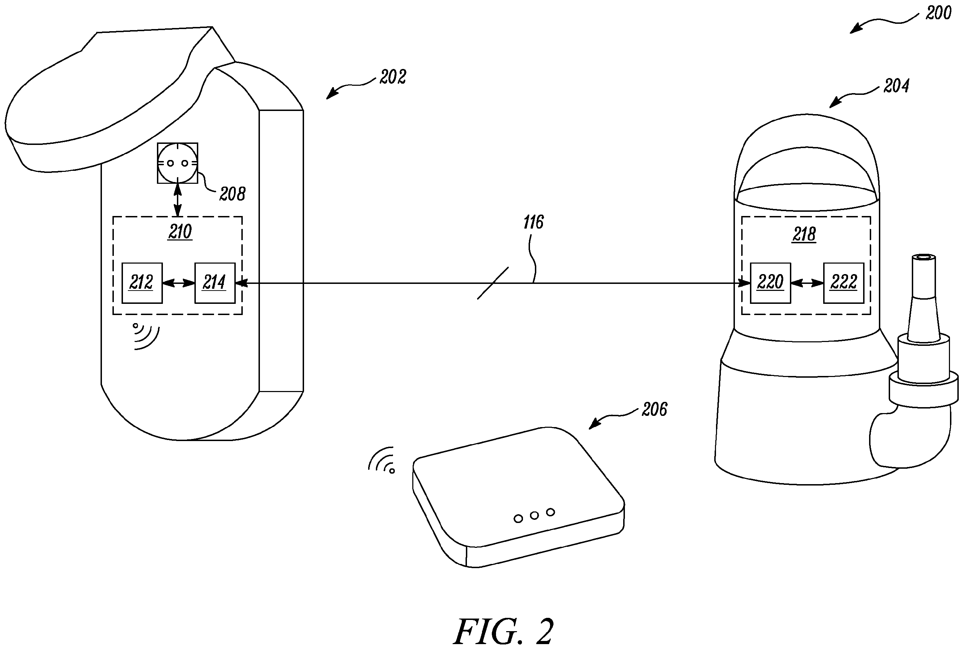

**FIG. 2** illustrates a system **200** having a communication between a first terminal **202** and a second terminal **204.** The present disclosure illustrates the second terminal **204** as a remotely placed electric tool, herein a pump and the first terminal **202** as a GARDENA Smart System. However, actual implementation of the present disclosure may have any type, combination, arrangement of the first terminal **202** and the second terminal **204.** The first terminal **202** may be one or more of a Smart Cable Master (SCM), a transceiver, etc. The second terminal **204** may be one or more of a Smart Cable Slave (SCS), a transceiver, etc. The first terminal **202** includes a power plug **208** electrically coupled to an AC power source and a communication unit **210.** The communication unit **210** may further include (or integrated with) one or more of a wired communication interface, a radio communication unit **212,** a wireless smart gateway **206,** or a communication unit plug **214** to transmit an AC package. The AC package may be transmitted over a dedicated single wire communication interface **116** that connects the first terminal **202** and the second terminal **204.** The second terminal **204** includes an electric tool, remotely placed with respect to the first terminal **202.** The second terminal **204** may include one or more of a communication unit **218.** The communication unit **218** further includes a communication unit pump, a control unit pump **220,** or a motor **222** etc.

In some embodiments, a switching device is electrically coupled to the first terminal **202** that is turned on to establish a current path through the single wire communication interface **116** (hereinafter alternatively referred to as the interface **116)** from the first terminal **202** to the second terminal **204.** The switching device is configured to generate some information, which may be further modulated by the voltage modulator **106** at the first terminal **202,** to generate a first signal. The second terminal **204** demodulates the received first signal to retrieve the information. In some embodiments, the system **100** includes a current path through the single wire communication interface **116** from the second terminal **108, 204** to the first terminal **102, 202.** Also, the load modulator **112** coupled to the second terminal **204** modulates the information received to generate the second signal as the load modulated current. Thus, the present disclosure provides that the current generally does not attenuate even in a long distance within one closed loop, more reliable data transmission may be possible.

Further, the system **200** includes the first terminal **202** electrically coupled to an AC source via the power plug **208.** The first terminal **202** transmits the first signal having the information encoded in an AC voltage package using the single wire communication protocol and eliminates the AC voltage package from the AC source. The second terminal **204** receives or detects missing AC voltage package from the first terminal **202** and decodes the received AC voltage package to extract the information. Therefore, the sinusoidal shape of the AC power signal supplied to the second terminal **204** in the form of encoded AC package is not distorted. Further, in case a single AC voltage package misses out, it may not affect the system **200.** For example, when the second terminal **204** is a remotely placed electric tool, such as pump, the missed single AC voltage package may not affect the system **200** due to the pump's mass inertia phenomena.

The system **200** discloses the second terminal **204,** coupled to a remotely placed electric tool with respect to the first terminal **202.** Hence, being at the remote location, it may not be possible or preferable to manually record the readings at the second terminal **204** continuously. Further, the electric tool (for example the pump) at the second terminal **204,** may be circulated by water and need at least one dedicated interface for smooth communication, as the wireless signals may get significantly attenuated in such circumstances making any analysis difficult. The advantageous effect of switching AC supply voltage at zero-crossing is that in the present system **200** the switching process may generate significantly less supply-related interference as compared to communication via phase control.

In some embodiments, the communication from the second terminal **204** to the first terminal **202** may include load modulation of the received first signal. The second terminal **204** may not have an AC supply to generate an information signal. Therefore, to communicate an information from the second terminal **204** to the first terminal **202,** the second terminal **204** may disconnect itself from consuming current from the first terminal **202.** The first terminal **202** may recognize this due to reduced power consumption by the second terminal **204.** Therefore, the first terminal **202** may reconstruct originally transmitted bit stream (i.e., the first signal). This may indicate that the second terminal **204** is in a standby mode and the motor **222** is not supplied with any power. Hence, a particular signal for example a single sine wave is transmitted to the second terminal **204** such as remotely placed electrical device and the load modulator **112** coupled to the second terminal **204** to modulate the received signal. The second terminal **204** may shift a phase relation between a voltage and current of the received first signal by selectively switching the information signal.

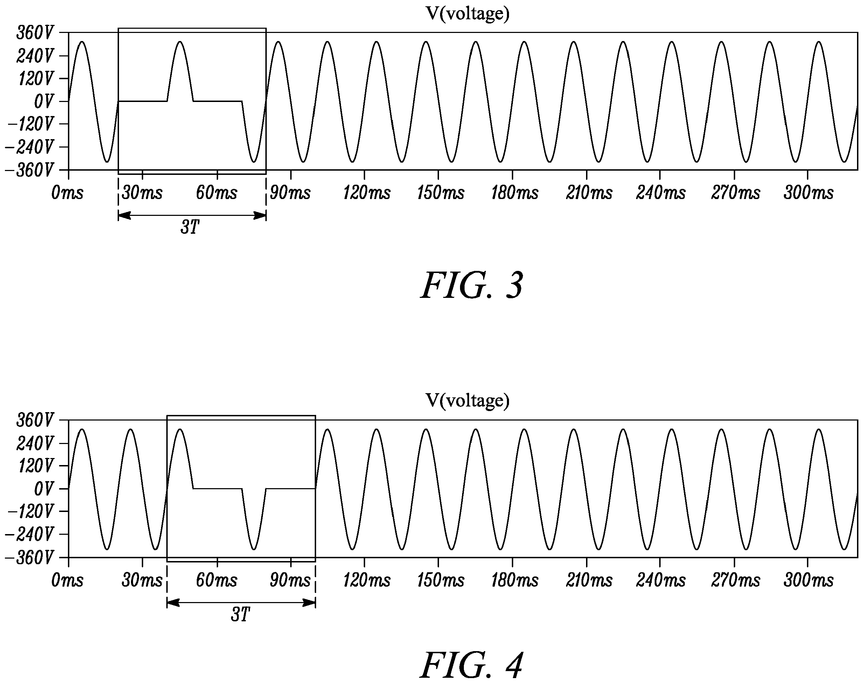

**FIGS. 3** to **8** illustrate exemplary payload bits or an information to be transmitted over the interface **116.** In particular, when the information is transmitted from the first terminal **202** to the second terminal **204,** the first terminal **202** may cause a pulse-shaped current change by opening and closing the switching circuit near zero crossing on the first terminal **202** side. This may cause an instantaneous voltage to change in the AC voltage on the first terminal **202** side. At this instant, the second terminal **204** is in a state of drawing current from the first terminal **202** side with the second terminal **204** side switch being closed, the current is detected based on the instantaneous voltage change on the first terminal **202.** The current is transmitted to the second terminal **204** as a pulse-like current change. Therefore, information can be received by extracting and decoding a pulsed current change or voltage change from the signal transmission path or the interface **116.**

**FIG 3** illustrates an exemplary start symbol or optionally a start bit that may be transmitted from the first terminal **202** to the second terminal **204** to initiate a communication over the interface **116.** The start symbol as disclosed in **FIG. 3** may include three time periods (3T). Each time period T makes one complete cycle for example a sine wave of 20ms. Further, in an exemplary embodiment disclosed in **FIG 3****,** a start symbol may be made up of three cycles i.e., 60ms. The three cycles received from the main voltage are manipulated to form a fixed pattern by eliminating part of the three time periods 3T. The fixed pattern as shown in **FIG. 3** discloses a start symbol having the three time periods 3T from 20ms to 80ms. The three time periods 3T may be manipulated to form a fixed pattern by eliminating the sine wave from 20ms to 40ms i.e., - the first T and 50ms to 70ms i.e., - 1.5T to 2.5T from the main voltage to send a start symbol.

**FIG 4** illustrates an exemplary stop symbol or optionally a stop bit that may be transmitted from the first terminal **202** to the second terminal **204** to terminate or stop communication over the interface **116.** The stop symbol as disclosed in **FIG. 4** may include three time periods (3T). Each time period T makes one complete cycle for example a sine wave of 20ms. Further, in an exemplary embodiment disclosed in **FIG 4****,** the stop symbol may be made up of three cycles i.e.- 60ms. The three cycles received from the main voltage are manipulated to form a fixed pattern. The fixed pattern as shown in **FIG. 4** discloses the stop symbol having 3T from 40ms to 100ms. The three time periods 3T may be manipulated to form a fixed pattern by eliminating the sine wave from 50ms to 70ms i.e., 0.5 T-1.5T and 80ms to 100ms i.e., 2T to 3T from the main voltage to send a stop symbol.

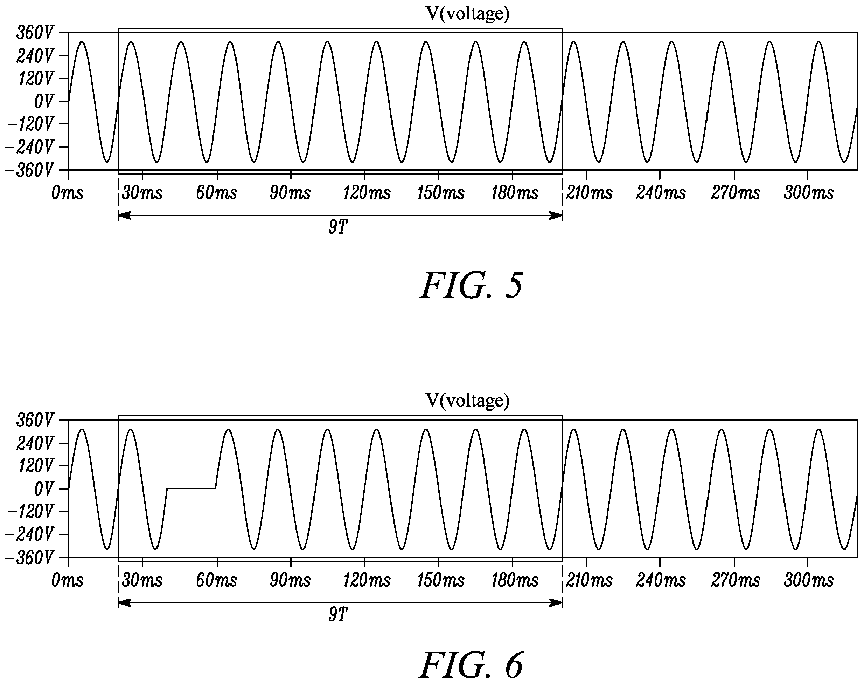

**FIG. 5** illustrates an information signal having a payload packet including nine periods (0 to 9T) that may start directly after the start symbol. The payload packet may optionally include a bit indication a length of packet information, along with encoded information bits. **FIG. 5** illustrates a graphical representation of a code 0000, according to an embodiment of the present disclosure, without eliminating any sine wave form the main voltage signal. The exemplary information signal disclosed in the present disclosure includes 9T signal i.e., 20ms to 200ms. Each half cycle is made up of 10ms time, therefore total 9T includes 18 half cycles to form 180ms time period i.e., 20ms to 200ms. The disclosed 9T period may transmit information in a 4-bit code format from 0000 to 1111. **FIG. 6** illustrates a graphical representation of a code 0001, according to an embodiment of the present disclosure. The information bits are coded by eliminating a 3rd and a 4^{th} half cycles from a complete sine wave (0-9T) from the main voltage. Further, a complete sine wave is eliminated by eliminating the 3^{rd} negative half cycle and the 4^{th} positive half cycle (1T - 2T) to maintain an overall neutral wave. The code 0001 discloses that the information includes the sine wave present from 20ms to 40ms and 60ms to 200ms to transmit the code 0001 over the interface **116.**

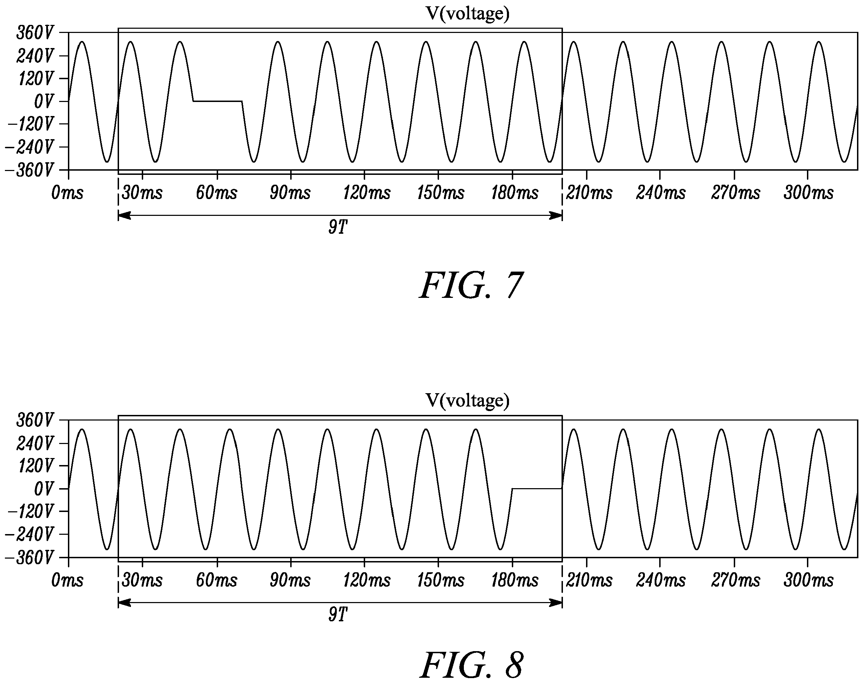

**FIG. 7** illustrates a graphical representation of a code 0010, according to an embodiment of the present disclosure. The information bits are coded by eliminating a 4^{th} half cycles and a 5^{th} half cycle (1.5T - 2.5T) from a complete sine wave (0-9T) from the main voltage. Further, a complete sine wave is eliminated by eliminating the 4th negative half cycle and 5^{th} positive half cycle (1.5T - 2.5T) to maintain an overall neutral wave. The code 0010 discloses that the information includes the sine wave present from 20ms to 50ms and 70ms to 200ms to transmit the information over the interface **116.**

**FIG.8** illustrates a graphical representation of a code 1111, according to an embodiment of the present disclosure. The information bits are coded by eliminating a 17^{th} and 18^{th} half cycles from a complete sine wave (0-9T) from the main voltage. Further, a complete sine wave is eliminated by eliminating the 17^{th} positive half cycle and 18^{th} negative half cycle to maintain an overall neutral wave. The code 1111 discloses that the information includes the sine wave present from 20ms to 180ms to transmit the information over the interface **116.** Therefore, in the code 1111 ninth (last) sine wave is eliminated out from the main voltage and hence, the last bit is transmitted.

In some embodiment, there may be some more additional bits such as a checksum or a parity bit, an ACK or the acknowledgement bit, etc. Further, the first terminal **202** transmits the parity bit to the second terminal **204** for extension and the second terminal **204** transmits an ACK bit to the first terminal **202** in response to the received AC voltage package. Furthermore, the payload is generated by eliminating at least an AC cycle from the AC voltage package for transmission from the first terminal **202.** Therefore, the signal transmitted from the first terminal **202** to the second terminal **204** may have equal number of positive and negative half cycles thereby not generating any disturbing DC offsets in the transmitted first signal.

. In some embodiments, when the remotely placed electric tool may be in a standby mode, the received first signal is transmitted back by the second terminal **204** to the first terminal **202** as the second signal without any modification. Therefore, though the second terminal **204** may be deprived of generating any signal, the second terminal **204** may indicate that it is busy and not ready to receive the input signal or the first signal.

In some embodiments, the second signal is generated based on a load modulation of the received payload from the first signal, to generate the load modulated current signal at the second terminal **204.** Further, the first terminal **202** may be a Smart Cable Master, and the second terminal **204** may be a Smart Cable Slave. This may allow robust single dedicated communication interface for fast and efficient communication between the master **102, 202** and slave **108, 204** terminals.

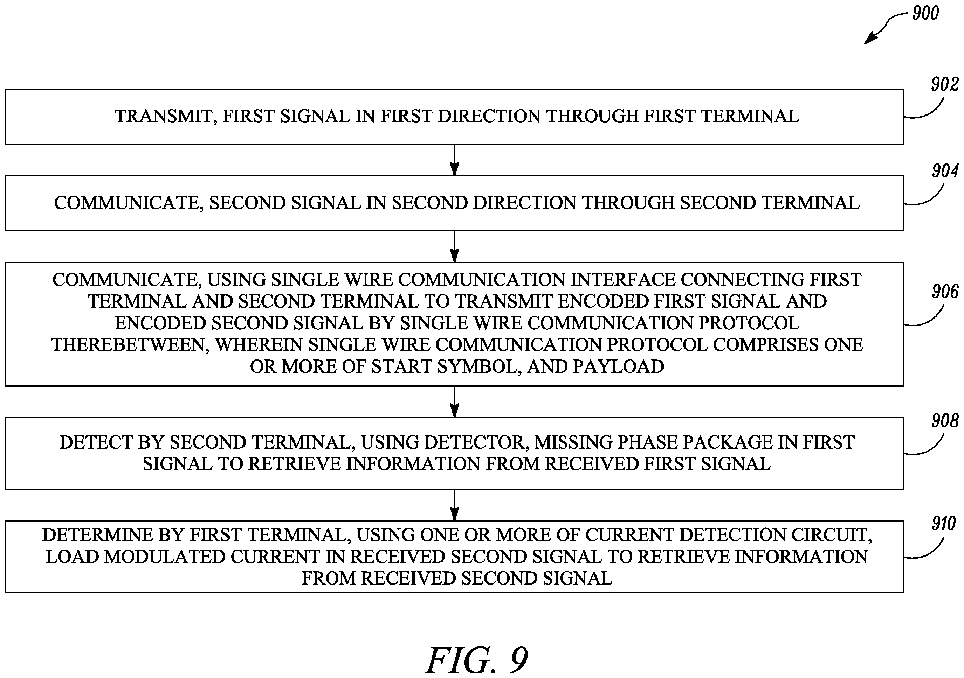

**FIG. 9** illustrates a flowchart of a method **900** for a uni-directional or a bi-directional communication in accordance with the present disclosure. At step**902,** the method **900** includes transmitting the first signal in a first direction through the first terminal **102, 202.** Further, at step**904**, the method **900** includes communicating the second signal in a second direction through the second terminal **108, 204.** Furthermore, at step**906**, the method **900** includes communicating, using a single wire communication interface **116** connecting the first terminal **102, 202** and the second terminal **108, 204** to transmit the encoded first signal and the encoded second signal over the interface **116** by a single wire communication protocol therebetween. The single wire communication protocol includes one or more of a start symbol, and a payload etc. Additionally, the single wire communication protocol may also include a stop symbol or a stop bit. Further, the payload of the single wire communication protocol may optionally include a length of an information carried by the payload. At step**908**, the method **900** includes detecting by the second terminal **108, 204,** using the detector **110,** a missing phase package or a missing half wave in the first signal to retrieve an information from the received first signal. At step**910**, the method **900** includes determining by the first terminal **102, 202,** using one or more of the current detection circuit **106,** a load modulated current in the received second signal to retrieve information from the received second signal.

In some embodiments, the communication interface may be a wireless gateway **206.** The devices such as the first terminal **102, 202** and the second terminal **108, 204,** includes at least one of a remotely placed electric tool such as a watering equipment, a submersible pump, a machinery in mines, gadgets in oil refinery or coal mines, unmanned aerial vehicles and so on which may be in communication with the gateway **206** via a wired or a wireless connection. The gateway **206** may subsequently have wired or wireless connection to an access point **AP** which may be directly or indirectly connectable to the first terminal **202.** The access point **AP** may be a router of a home network of an operator. In some cases, direct connection of the **AP** to the first terminal **202** may be provided via a short-range wireless communication methods (e.g., Bluetooth, WiFi and/or the like). Indirect connection of the access point **AP** to the first terminal **202** that may be a user terminal may occur via a network in the system **200.** The network may be a data network, such as a local area network (LAN), a metropolitan area network (MAN), a wide area network (WAN) (e.g., the internet), a wireless personal area network (WPAN), and/or the like, which may couple devices (e.g., deployed components) to devices such as processing elements (e.g., personal computers, server computers or the like) and/or databases such as the user terminal.

The gateway **206** may be a translation agent configured to interface with any or all the deployed components via wired or wireless communication. In some embodiments, the gateway **206** may include a high-performance antenna to enable the gateway **206** to communicate wirelessly with deployed components. The gateway **206** may also provide the ability for each of the deployed components to be monitored, controlled, programmed or otherwise interfaced with by an operator using the terminal **202** such as a user terminal.

Therefore, the present disclosure provides a simple, efficient communication as there is only a single dedicated wire communication interface **116.** Due to the use of the single wire communication interface **116,** the infrastructure cost as well as the complexity of the system **100** may reduce. Due to the use of the single wire communication interface in between two voltage devices, the chances of losing an AC voltage package may be low. However, even if the single AC voltage package is lost, the second terminal **108, 202** may remain unaffected. For example, in case the second terminal **108, 202** may be a remotely placed electric tool such as a pump, the pump may remain unaffected by the single AC voltage package due to its mass inertia. The present disclosure may overcome the practical issues related to wireless communication with the remotely placed electric tool, for example a signal attenuation caused in pumps due to surrounding water. Therefore, the present disclosure may overcome the issues related to requirement of a complex circuit to fulfil even normative standards, may be less susceptible to interference as well as less expensive. Therefore, the present disclosure may provide a robust smart communication technique that may be easily integrated with existing products as well as sustainable due to fewer raw material resources.

In the drawings and specification, there have been disclosed preferred embodiments and examples of the disclosure and, although specific terms are employed, they are used in a generic and descriptive sense only and not for the purpose of limitation of the scope of the disclosure being set forth in the following.

### LIST OF ELEMENTS

- **100**: Communication System
- **102**: First terminal
- **104**: Detector at First terminal
- **106**: Voltage modulator
- **108**: Second terminal
- **110**: Detector at second terminal
- **112**: Load modulator
- **114**: Motor
- **116**: Single wire communication interface
- **200**: Communication System
- **202**: First terminal
- **204**: Second terminal
- **206**: Wireless Gateway
- **208**: Power plug
- **210**: Communication module
- **212**: Radio communication module
- **214**: Communication module plug
- **218**: Communication unit
- **220**: Control unit pump
- **222**: Motor
- **900**: Method
- **902**: Step
- **904**: Step
- **906**: Step
- **908**: Step
- **910**: Step
- **T**: Time period
- **AP**: Access point

## Claims

1. A communication system **(100, 200)** comprising:
a first terminal **(102, 202)** transmitting a first signal and receiving a second signal;
a second terminal **(108, 204)** transmitting the second signal and receiving the first signal;
**characterized in that:**
a single wire communication interface **(116)** configured to connect the first terminal **(102, 202)** and the second terminal **(108, 204)** for the communication, wherein the single wire communication interface **(116)** transmits the encoded first signal and the encoded second signal using a single wire communication protocol therebetween,
wherein the single wire communication protocol comprises one or more of a start symbol, and a payload;
wherein the second terminal **(108, 204),** using a detector **(110),** detects a missing phase package in the first signal to retrieve an information from the received first signal; and
wherein the first terminal **(102, 202)** includes one or more of a current detection circuit, to determine a load modulated current in the received second signal to retrieve an information from the received second signal.

2. The system **(100)** of claim 1, the system **(100)** further comprises:
a switching device coupled to the first terminal **(102, 202)** that is turned on to establish a current path through the single wire communication interface **(116)** from the first terminal **(102, 202)** to the second terminal **(108, 204),**
wherein the switching device is configured to generate the information that is further modulated by a voltage modulator **(106)** at the first terminal **(102, 202),** to generate the first signal; and wherein the second terminal **(108, 204)** demodulates the received first signal to retrieve the information.

3. The system **(100)** of claim 1, the system **(100)** further comprises:
a current path through the single wire communication interface **(116)** from the second terminal **(108, 204)** to the first terminal **(102, 202),**
wherein a load modulator **(112)** coupled to the second terminal **(108, 204)** modulates the received information to generate the second signal as the load modulated current.

4. The system **(100, 200)** of claim 2 and 3, wherein the first terminal **(102, 202)** is electrically coupled to an AC source via a power plug **(208),** the first terminal **(102, 202)** transmits the first signal comprising the information encoded in an AC voltage package using the single wire communication protocol and eliminates the AC voltage package from the AC source and the second terminal **(108, 204)** receives the AC voltage package from the first terminal **(102, 202)** and decodes the received AC voltage package to extract the information.

5. The system **(100, 200)** of claim 4, wherein the second terminal **(108, 204)** is coupled to a remotely placed electric tool **(204)** with respect to the first terminal **(102, 202).**

6. The system **(100, 200)** of claim 3, wherein the first terminal **(102, 202)** transmits the AC voltage package using the single wire communication protocol comprising the payload having equal or unequal number of positive and negative half-cycles.

7. The system **(100, 200)** of claim 4, wherein the first terminal **(102, 202)** transmits a parity bit to the second terminal **(108, 204)** for extension and the second terminal **(108, 204)** transmits an ACK bit to the first terminal **(102, 202)** in response to the received AC voltage package.

8. The system **(100, 200)** of claim 1, wherein the information signal in the first signal is generated based on at least one of a zero-voltage crossing control technique, or a zero-current crossing control technique.

9. The system **(100, 200)** of claim 4, wherein the payload is generated by eliminating at least an AC half cycle from the AC voltage package for transmission from the first terminal (**102, 202**).

10. The system **(100, 200)** of claim 2, wherein the second signal is generated in response to the received first signal based on a load modulation of the received payload from the first signal, to generate the load modulated current signal at the second terminal **(108, 204).**

11. The system **(100, 200)** of claim 1, wherein the first terminal **(102, 202).is** a Smart Cable Master, and the second terminal **(108, 204)** is a Smart Cable Slave.

12. A method **(900)** for communication, the method **(900)** comprising the steps of:
transmitting **(902),** a first signal in a first direction through a first terminal **(102, 202);**
communicating **(904),** a second signal in a second direction through a second terminal **(108, 204);**
**characterized by**
communicating **(906),** using a single wire communication interface **(116)** connecting the first terminal **(102, 202).**and the second terminal **(108, 204)** to transmit the encoded first signal and the encoded second signal by a single wire communication protocol therebetween,
wherein the single wire communication protocol comprises one or more of a start symbol, and a payload;
detecting **(908)** by the second terminal **(108, 204),** using a detector **(110),** a missing phase package in the first signal to retrieve an information from the received first signal; and
determining **(910)** by the first terminal **(102, 202),** using one or more of a current detection circuit, a load modulated current in the received second signal to retrieve an information from the received second signal.

13. The method **(900)** of claim 12, further comprises:
generating, at the first terminal **(102, 202),** the first signal by voltage modulation of selectively interrupting an AC power signal from an AC source during a predetermined phase time.

14. The method **(900)** of claim 12, further comprises: modulating, at the second terminal **(108, 204),** using a load modulation involves selectively setting a load electrically coupled to the second terminal **(108, 204)** for phase shifting of the payload received from the first terminal (**102, 202**).

15. The method **(900)** of claim 13, wherein communicating between the first terminal **(102, 202)** and the second terminal **(108, 204)** comprises synchronization by mutually detecting an AC voltage zero-crossing.

## Amended claims

### Amended claims in accordance with Rule 137(2) EPC.

1. A communication system **(100, 200)** comprising:
a first terminal **(102, 202)** transmitting a first signal and receiving a second signal;
a second terminal **(108, 204)** transmitting the second signal and receiving the first signal;
a single wire communication interface **(116)** configured to connect the first terminal **(102, 202)** and the second terminal **(108, 204)** for the communication, wherein the single wire communication interface **(116)** transmits the encoded first signal and the encoded second signal using a single wire communication protocol therebetween,
wherein the single wire communication protocol comprises one or more of a start symbol, and a payload;
wherein the first terminal **(102, 202)** includes one or more of a current detection circuit, to determine a load modulated current in the received second signal to retrieve an information from the received second signal;
**characterized in that:**
wherein the second terminal **(108, 204),** using a detector **(110),** detects a missing phase package in the first signal to retrieve an information from the received first signal.

2. The system **(100)** of claim 1, the system **(100)** further comprises:
a switching device coupled to the first terminal **(102, 202)** that is turned on to establish a current path through the single wire communication interface **(116)** from the first terminal **(102, 202**) to the second terminal **(108, 204),**
wherein the switching device is configured to generate the information that is further modulated by a voltage modulator **(106)** at the first terminal **(102, 202),** to generate the first signal; and wherein the second terminal **(108, 204)** demodulates the received first signal to retrieve the information.

3. The system **(100)** of claim 1, the system **(100)** further comprises:
a current path through the single wire communication interface **(116)** from the second terminal **(108, 204)** to the first terminal **(102, 202),**
wherein a load modulator **(112)** coupled to the second terminal **(108, 204)** modulates the received information to generate the second signal as the load modulated current.

4. The system **(100, 200)** of claim 2 and 3, wherein the first terminal **(102, 202)** is electrically coupled to an AC source via a power plug **(208),** the first terminal **(102, 202)** transmits the first signal comprising the information encoded in an AC voltage package using the single wire communication protocol and eliminates the AC voltage package from the AC source and the second terminal **(108, 204)** receives the AC voltage package from the first terminal **(102, 202)** and decodes the received AC voltage package to extract the information.

5. The system **(100, 200)** of claim 4, wherein the second terminal **(108, 204)** is coupled to a remotely placed electric tool **(204)** with respect to the first terminal **(102, 202).**

6. The system **(100, 200)** of claim 3, wherein the first terminal **(102, 202)** transmits the AC voltage package using the single wire communication protocol comprising the payload having equal or unequal number of positive and negative half-cycles.

7. The system **(100, 200)** of claim 4, wherein the first terminal **(102, 202)** transmits a parity bit to the second terminal **(108, 204)** for extension and the second terminal **(108, 204)** transmits an ACK bit to the first terminal **(102, 202)** in response to the received AC voltage package.

8. The system **(100, 200)** of claim 1, wherein the information signal in the first signal is generated based on at least one of a zero-voltage crossing control technique, or a zero-current crossing control technique.

9. The system **(100, 200)** of claim 4, wherein the payload is generated by eliminating at least an AC half cycle from the AC voltage package for transmission from the first terminal **(102, 202).**

10. The system **(100, 200**) of claim 2, wherein the second signal is generated in response to the received first signal based on a load modulation of the received payload from the first signal, to generate the load modulated current signal at the second terminal **(108, 204).**

11. The system **(100, 200**) of claim 1, wherein the first terminal **(102, 202).is** a Smart Cable Master, and the second terminal **(108, 204**) is a Smart Cable Slave.

12. A method **(900)** for communication, the method **(900)** comprising the steps of:
transmitting **(902),** a first signal in a first direction through a first terminal **(102, 202);**
communicating **(904),** a second signal in a second direction through a second terminal **(108, 204);**
communicating **(906),** using a single wire communication interface **(116)** connecting the first terminal **(102, 202).**and the second terminal **(108, 204**) to transmit the encoded first signal and the encoded second signal by a single wire communication protocol therebetween,
wherein the single wire communication protocol comprises one or more of a start symbol, and a payload; and
determining **(910)** by the first terminal **(102, 202),** using one or more of a current detection circuit, a load modulated current in the received second signal to retrieve an information from the received second signal
**characterized by:**
detecting **(908)** by the second terminal **(108, 204),** using a detector **(110),** a missing phase package in the first signal to retrieve an information from the received first signal.

13. The method **(900)** of claim 12, further comprises:
generating, at the first terminal **(102, 202),** the first signal by voltage modulation of selectively interrupting an AC power signal from an AC source during a predetermined phase time.

14. The method **(900)** of claim 12, further comprises: modulating, at the second terminal **(108, 204),** using a load modulation involves selectively setting a load electrically coupled to the second terminal **(108, 204)** for phase shifting of the payload received from the first terminal **(102, 202).**

15. The method **(900)** of claim 13, wherein communicating between the first terminal **(102, 202)** and the second terminal **(108, 204**) comprises synchronization by mutually detecting an AC voltage zero-crossing.
